# EUROPEAN PATENT APPLICATION

(11) **EP 4 249 830 A1**
(43) Date of publication of application: **27.09.2023**
(21) Application number: 22164199.6
(22) Date of filing: 24.03.2022
(51) Int. Cl.: F25B 49/00, F25B 6/02, F25B 49/02

(54) **REFRIGERATION SYSTEM**

(71) Applicant: Emerson Climate Technologies GmbH, 13507 Berlin (DE)
(72) Inventor: Huchtemann, Kristian, 52076 Achen-Oberforstbach (DE); Winandy, Eric, 52076 Achen-Oberforstbach (DE); Steils, Raymond, 52076 Achen-Oberforstbach (DE); Mignot, Guillaume, 52076 Achen-Oberforstbach (DE); Bertagnolio, Stephane, 52076 Achen-Oberforstbach (DE); Dickes, Rémi, 52076 Achen-Oberforstbach (DE)
(74) Representative: Manitz Finsterwald Patent- und Rechtsanwaltspartnerschaft mbB

(57) **Abstract**

The invention relates to a refrigeration system comprising at least one display cabinet equipped with a refrigeration apparatus defining at least one refrigeration circuit and comprising: at least one compressor, a condenser, an expansion valve, an evaporator, a refrigerant circulating therethrough, a plurality of sensors measuring pressure and temperature of the refrigerant at various positions in the refrigeration circuit, and a control module configured to control operation at least of the compressor based on output from at least one of the sensors, wherein the control module is further configured to detect any faulty or non-optimal functioning of at least one of the compressor, the expansion valve and a sensor based on output from at least one of the sensors.

## Description

The invention relates to a refrigeration system comprising at least one display cabinet equipped with a refrigeration apparatus defining at least one refrigeration circuit and comprising: at least one compressor, a condenser, an expansion valve, an evaporator, a refrigerant circulating therethrough, a plurality of sensors measuring pressure and temperature of the refrigerant at various positions in the refrigeration circuit, and a control module configured to control operation at least of the compressor based on output from at least one of the sensors.

Known refrigeration systems of this kind often comprise a plurality of display cabinets and are, for example, installed in grocery stores or supermarkets where the display cabinets serve to display food, in particular fresh food and/or frozen food.

It is an object of the invention to provide a refrigeration system of the above kind which allows for more reliable and efficient and, ultimately, more economical operation.

This object is satisfied by a refrigeration system in accordance with claim 1.

It is a general idea of the invention to use the temperature and pressure sensors that are typically provided in a refrigeration apparatus for the control of at least the compressor, also for the detection of any system malfunction and/or inefficient operation of the refrigeration system. To this end, the control module is not only configured to control operation at least of the compressor, but it is also configured to detect any faulty or non-optimal functioning of at least one of the compressor, the expansion valve and a sensor based on output from at least one of the sensors. In other words, a potential malfunctioning of the expansion valve or of the compressor is not detected by monitoring the expansion valve or the compressor directly, but rather indirectly by monitoring the output of certain sensors measuring pressure and/or temperature of the refrigerant at various positions in the refrigeration circuit. Likewise, correct functioning of a sensor can be verified. Thereby, not only malfunction and/or inefficient operation of the refrigeration system can be detected easily and cost efficiently, but also the cause of the malfunctioning and/or inefficient operation can be identified with great likelihood, thus, making a specific troubleshooting possible.

According to an embodiment, the control module may determine a faulty or non-optimal functioning of a sensor if the sensor output does not show an expected behavior in a predetermined operation event.

According to a further embodiment, a check valve may be arranged in the compressor or downstream of the compressor and controlled to close a discharge line downstream of the compressor when the compressor is temporarily shut-off; the expansion valve may be controlled to close when the compressor is temporarily shut-off; the refrigeration apparatus may comprise a suction line pressure sensor monitoring refrigerant suction pressure in a suction line upstream of the compressor and a discharge line pressure sensor monitoring refrigerant discharge pressure in the discharge line downstream of the compressor; and the control module may be configured to detect a faulty or non-optimal functioning of the expansion valve based on an equalization of the refrigerant suction pressure and discharge pressure during a temporary compressor shut-off. Non-optimal performance of the refrigeration apparatus and/or compressor damage, e.g. due to non-optimal control of the superheat, can therefore be avoided.

The control module may be configured to detect a faulty or non-optimal functioning of the expansion valve based on the frequency of pressure equalization over a plurality of temporary compressor shut-offs, for example, based on the number of pressure equalization occurrences throughout a day.

According to a further embodiment, at least one of the display cabinets may further comprise: a curtain or door configured to close off an interior space of the display cabinet; at least one fan configured to push air through or over the evaporator; and an air inlet temperature sensor arranged to measure the air inlet temperature of the air pushed through or over the evaporator, wherein the control module may be configured to detect an opening and a closing of the curtain or door based on the measured air inlet temperature.

The control module may be configured to detect an opening and a closing of the curtain or door based on the measured air inlet temperature only during operation of the fan and, in particular, if the fan has been operating for a predetermined amount of time.

The control module may be configured to detect an opening of the curtain or door based on a positive peak in the derivative of the measured air inlet temperature and a closing of the curtain or door based on a negative peak in the derivative of the measured air inlet temperature.

More specifically, an opening of the curtain or door may be detected if a positive peak in the derivative of the measured air inlet temperature exceeds a first threshold; and/or a closing of the curtain or door may be detected if a negative peak in the derivative of the measured air inlet temperature exceeds a second threshold.

The air inlet temperature sensor may be arranged at a location where an air flow inside the interior space of the display cabinet is directly influenced by ambient air upon an opening of the curtain or door.

The control module may be configured to control operation of the display cabinet based on a detected opening or closing of the curtain or door, in particular, operation of at least one of the compressor, the expansion valve, the fan and lights of the display cabinet.

Furthermore, the control module may be configured to issue a warning if an opening of the curtain or door is detected or if a closing of the curtain or door is not detected within a predetermined amount of time after an opening of the curtain or door has been detected.

According to a further embodiment, the control module may be configured to detect an unsuccessful start of the compressor based on a comparison of the derivative of a refrigeration parameter prior to the output of a start command to the compressor with the derivative of the refrigeration parameter after the output of a start command to the compressor. Thereby, it is possible to identify a compressor not starting properly within a relatively short time, ideally before an unsuccessful compressor start-up leads to severe problems such as a potential loss of food stored in the display cabinet.

The refrigeration parameter may be at least one of a cabinet air temperature inside an interior space of the display cabinet, an evaporator fin temperature, an outlet temperature of water cooling the evaporator, and an outlet temperature of hydraulic fluid exchanging heat with the condenser.

According to a further embodiment, the display cabinet may be equipped with a refrigeration apparatus comprising an evaporator which is associated with a plurality of refrigeration circuits each comprising their own compressor, condenser and expansion valve, the refrigeration apparatus further comprising an air outlet temperature sensor measuring the air outlet temperature of air passing through or over the evaporator and a control module configured to detect an unsuccessful start of a compressor based on the measured air outlet temperature and, in particular, based on a comparison of the derivative of the air outlet temperature measured prior to the output of a start command to the compressor with the derivative of the air outlet temperature measured after to the output of a start command to the compressor.

According to a further embodiment, the refrigeration system may comprise a plurality of refrigerated display cabinets and further comprise a common heat sink, such as a hydraulic loop configured to transfer heat to ambient air, for example via a dry cooler, wherein the condenser of each display cabinet is configured to exchange heat with the common heat sink and wherein the condensers of the plurality of refrigerated display cabinets are connected in parallel to the common heat sink.

Such a refrigeration system may comprise a central monitor configured to detect an overcharged refrigeration circuit in one of the plurality of display cabinets based on the condensing temperatures in the plurality of display cabinets, in particular based on a significant deviation of the condensing temperature in the one display cabinet from an average condensing temperature in the plurality of display cabinets. An overcharged refrigeration circuit, i.e. too much refrigerant circulating in the refrigerant circuit, ultimately leads to system malfunction and/or inefficient operation of the refrigeration system. By monitoring the condensing temperatures in the plurality of display cabinets it is possible to detect an overcharged refrigeration circuit and consequently correct the amount of refrigerant circulating in the refrigeration circuit, and thereby to prevent any system malfunction and/or inefficient system operation.

The central monitor may be configured to calculate the condensing temperature in a display cabinet from the output of a discharge line pressure sensor monitoring refrigerant discharge pressure in the discharge line downstream of the condenser. Such a discharge line pressure sensor is typically provided in a refrigeration apparatus anyway. By using the output from this discharge line pressure sensor to also detect overcharging of the refrigeration circuit, no extra sensors need to be provided to this end. In particular, there is no need to implement any additional sensors measuring the temperature of the common heat sink, e.g. the temperature within a hydraulic loop.

Further aspects and advantages of the invention are disclosed in the following detailed description of the embodiments, the appended claims and the accompanying drawings.
- Fig. 1: generally illustrates a display cabinet comprising a refrigeration apparatus.

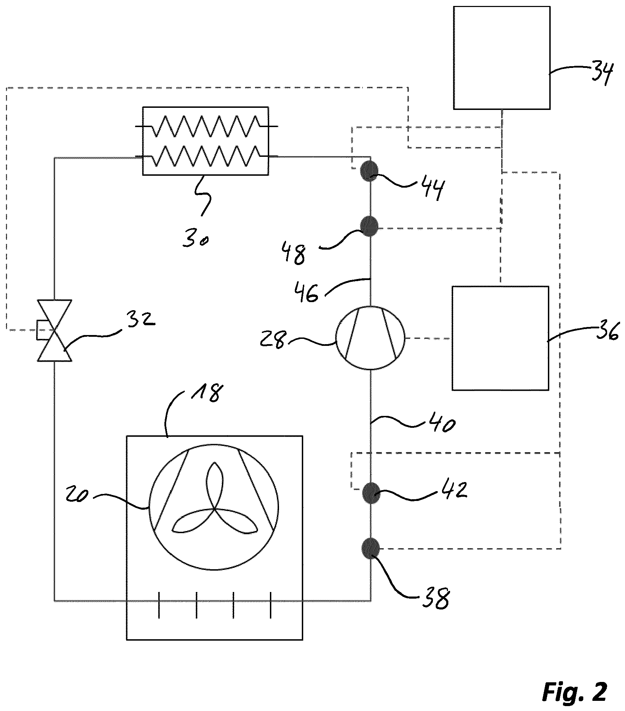

- Fig. 2: shows the refrigeration apparatus of Fig. 1 in more detail.
- Fig. 3: shows a graph representing the speed of a compressor of the refrigeration apparatus of Fig. 1 over time.
- Fig. 4A: shows a graph representing refrigerant discharge and suction pressure over time during normal operation.
- Fig. 4B: shows a graph representing refrigerant discharge and suction pressure over time during nonoptimal operation.
- Fig. 5: shows a decision tree allowing identification of a fault leading to pressure equalization during compressor shut off times.
- Fig. 6: shows an alternative embodiment of a refrigeration apparatus.
- Fig.7A: shows a display cabinet comprising a night curtain in a closed position.
- Fig. 7B: shows the night curtain in an open position.
- Fig. 8A: is a graph representing air inlet temperature over time during open, closed and open states of the night curtain.
- Fig. 8B: is a graph representing the derivative of the air inlet temperature over time during open, closed and open states of the night curtain.
- Fig. 9A: shows a graph representing air inlet temperature over time and a graph representing the derivative of the air inlet temperature over time during a closed, open and closed state of a door of a display cabinet.
- Fig. 9B: shows a graph representing air inlet temperature over time and a graph representing the derivative of the air inlet temperature over time during a closed, open and at least not properly closed state of the door.
- Fig. 10: shows a refrigeration system comprising a plurality of display cabinets connected to a common hydraulic loop.
- Fig. 11: shows the development of compressor speed during three compressor on periods which are separated by compressor off periods.
- Fig. 12: shows a decision tree allowing distinction of refrigerant circuit overcharging from condenser or hydraulic loop faults.

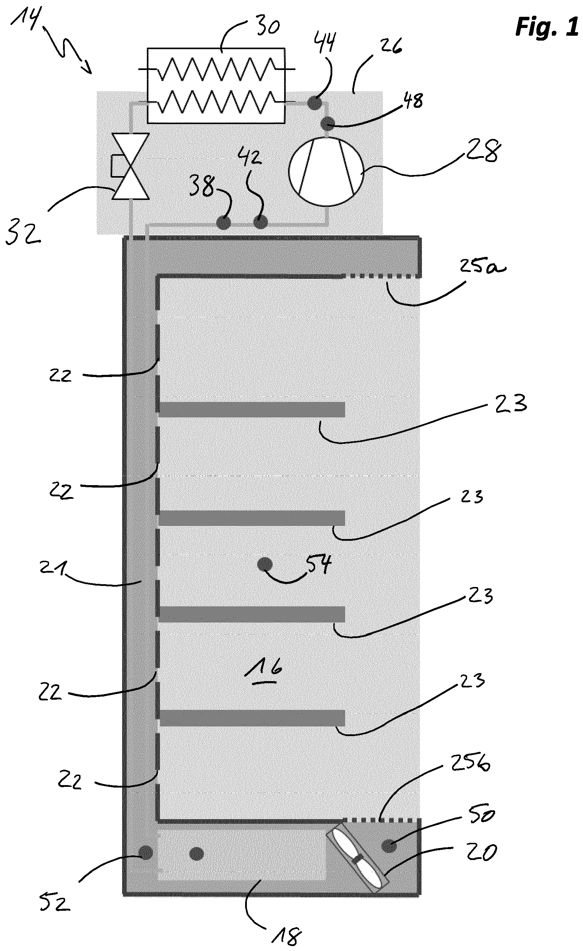

Fig. 1 shows a refrigerated display cabinet 14 which is part of a refrigeration system that may comprise just this one display cabinet 14 or a plurality of a display cabinets 14. The display cabinet 14 or the plurality of display cabinets 14 may be installed in a grocery store or supermarket and may be designed to display food, in particular fresh food and/or frozen food.

An interior space 16 of the display cabinet 14 is refrigerated by air that is blown through or over an evaporator 18 by means of at least one fan 20. Both the evaporator 18 and the fan 20 are arranged in a lower region of the display cabinet 14. Air which has been cooled by exchanging heat with the evaporator 18 is pushed along a back channel 21 of the display cabinet 14 and may enter into the interior space 16 via holes 22 which are distributed between shelves 23 of the display cabinet 14 in a back wall 24 of the display cabinet 14 limiting the interior space 16. The main stream is led through a top grid 25a which may be formed as a so-called honey comb to issue a laminar flow to a bottom grid 25b and back to the at least one fan 20.

The evaporator 18 is part of a refrigeration apparatus 26 of the display cabinet 14, which defines a refrigeration circuit and comprises, in addition to the evaporator 18, a compressor 28, a condenser 30, an expansion valve 32, a refrigerant circulating through the refrigeration circuit and a plurality of sensors measuring pressure and temperature of the refrigerant at various positions in the refrigeration circuit.

Operation of the refrigeration apparatus 26 is controlled by a control module 34. More specifically, the control module 34 controls the expansion valve 32 and the compressor 28, wherein the latter is controlled via a variable speed inverter drive 36. The control module 34 receives data from the plurality of sensors comprising: a suction line temperature sensor 38 measuring the temperature of the refrigerant in a suction line 40 of the refrigeration circuit upstream of the compressor 28; a suction line pressure sensor 42 measuring the pressure of the refrigerant in the suction line 40; a discharge line temperature sensor 44 measuring the temperature of the refrigerant in a discharge line 46 of the refrigeration circuit downstream of the compressor 28; and a discharge line pressure sensor 48 measuring the pressure of the refrigerant in the discharge line 46. In addition, the control module 34 receives data from an air inlet temperature sensor 50 measuring the inlet temperature of the air pushed through or over the evaporator 18 by the fan 20, from an air outlet temperature sensor 52 measuring the outlet temperature of the air passing through or over the evaporator 18, and from a cabinet air temperature sensor 54 measuring the cabinet air temperature in the interior space 16 of the display cabinet 14.

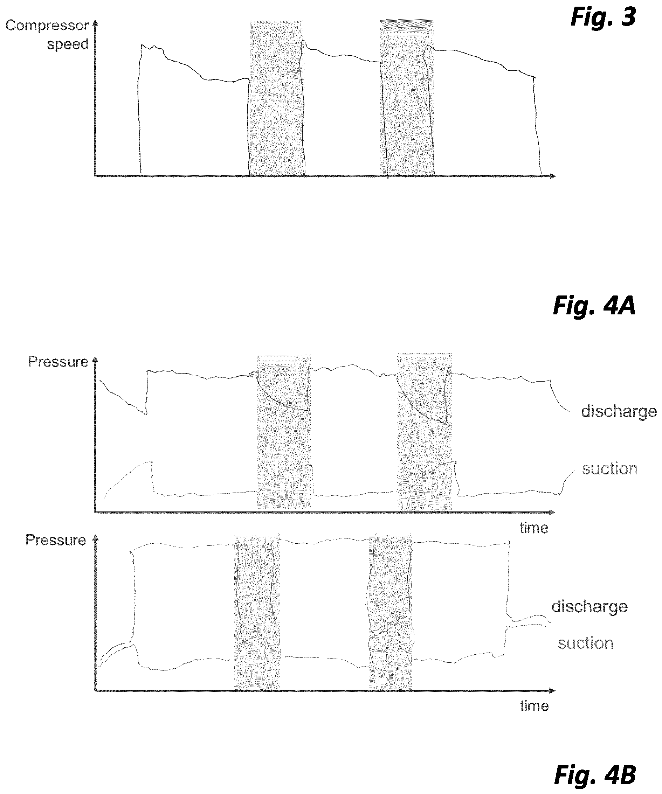

In order to defrost the evaporator 18, the compressor 28 is temporarily shut down several times throughout the day (Fig. 3). At the same time, the control module 34 commands the expansion valve 32 to close. Because of a check valve (not shown) in or at the outlet of the compressor 28, the discharge pressure measured by the discharge line pressure sensor 48, i.e. the pressure of the refrigerant in the discharge line 46, will remain on a relatively high level and the refrigerant suction pressure measured by the suction line pressure sensor 42, i.e. the pressure of the refrigerant in the suction line 40, will remain on a relatively low level, if the expansion valve 32 fully closes when the compressor 28 is turned off (Fig. 4A). This allows the compressor 28 to start from an already existing pressure differential at the next start-up.

However, if the expansion valve 32 does not fully close during a temporary compressor 28 shut down, for example, because the expansion valve 32 is not working properly due to being stuck or due to being connected wrongly and therefore turning in the wrong direction, i.e. fully opening when it is in fact commanded to fully close, an equalization of the refrigerant discharge pressure and the suction pressure will occur, as shown in Fig. 4B. Consequently, the control of the superheat will not be optimal. A faulty expansion valve 32 will therefore not only lead to non-optimal performance of the refrigeration apparatus 26 but can also result in compressor damage because of too low superheat.

By comparing the refrigerant discharge pressure and the suction pressure during the compressor off periods, the control module 34 can detect a faulty expansion valve 32 and issue a corresponding warning. Non-optimal performance of the refrigeration apparatus 26 and/or compressor damage can therefore be avoided.

It is to be noted, though, that even during normal operation pressure equalization might occur from time to time when the compressor 28 is shut down, for example, because of a leaking of the check valve in or at the compressor 28.

In order to detect a faulty expansion valve 32 with higher certainty, the control module 34 may therefore count the number of pressure equalizations that occur throughout a predetermined number of compressor off periods, for example, throughout the number of compressor off periods in a day, and issue a corresponding warning only if a predetermined percentage of all compressor off periods show pressure equalization.

The following potential faults may lead to pressure equalization during compressor shut down:
(1) The expansion valve 32 turns in the wrong direction because:
   (1a) the valve cables are switched. This is a common fault, especially if there are extensions to the valve cable. This fault may occur through a mistake in wiring the display cabinet 14 during the manufacturing process or when working on the valve cabling during repair work.
   (1b) of a software bug in the control module 34. Even though such a bug is unlikely, it could theoretically also lead to the expansion valve 32 turning in the wrong direction.
(2) The expansion valve 32 is not moving because:
   (2a) the valve needle is physically blocked or a valve coil is broken.
   (2b) the expansion valve 32 is not connected to the control module 34.
   (2c) of a software bug in the control module 34. Even though such a bug is unlikely, it could theoretically also lead to the expansion valve 32 turning in the wrong direction.
(3) The expansion valve 32 is working properly during compressor operation but is not closing during compressor off periods:
   Pressure equalization can, for example, happen because of a wrong calibration of the closing point of the expansion valve 32 or a loss of steps in the communication from the control module 34 to the electronic expansion valve 32.
(4) Compressor check valve malfunctioning or leakage:
   (4a) The compressor check valve may leak occasionally depending on operating conditions during compressor shut down.
   (4b) The compressor check valve may be broken and will therefore not close.
(5) Other faults that may lead to pressure equalization:
   If the compressor 28 is shut down by a safety device, for example, in case of a high pressure switch triggered, or by an electric outage, the control module 34 may not close the expansion valve 32, at least not quickly enough, to maintain the refrigerant discharge and suction pressure differential. This fault would be detected by analyzing if other faults are leading to the shut-down of the compressor.

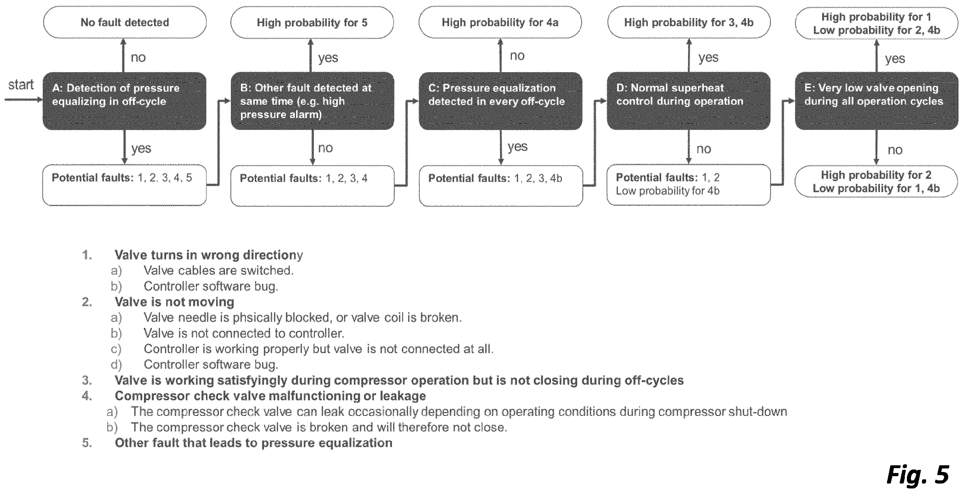

A decision tree which the control module 34 may follow in order to identify the particular fault leading to a detected pressure equalization during compressor shut down is shown in Fig. 5.

In a first step A, the control module 34 detects if there is any pressure equalization during compressor shut down at all. If this is not the case, the components of the refrigeration apparatus are operating properly. If a pressure equalization is detected, this may be due to anyone of the above faults (1) to (5).

In step B, the control module 34 checks if any other fault (5) has been detected at the same time as the pressure equalization. Should this be the case, the control module 34 assumes that this other fault (5) has led to the detected pressure equalization. If no other fault has been detected, the control module 34 assumes that one of above faults (1) to (4) has caused the pressure equalization and moves on to step C.

In step C, the control module 34 checks if pressure equalization is detected during every compressor off period. Should this not be the case, the control module 34 assumes with great certainty that fault (4a) has caused the pressure equalization, i.e. a leaking of the compressor check valve. Should, however, pressure equalization occur during every compressor off period, the control module 34 assumes with great likelihood that the expansion valve 32 either turns in the wrong direction (fault (1)) or does not move at all (fault (2)) or the compressor check valve is broken (fault (4b)), and moves on to step D.

In step D, the control module 34 checks if superheat control functions normally during compressor operation. For example, a start opening degree of the expansion valve 32 at the beginning of compressor operation may be set at 35%, and a maximum valve opening degree of a properly operating expansion valve 32 should always be above 20% throughout the compressor on period. It is to be noted that the specific values may vary depending on the size and/or configuration of the system.

In addition, the difference between the actual superheat and a superheat setpoint is checked. If superheat control is found to function normally during compressor operation, the control module 34 assumes with great certainty that the pressure equalization is caused by a faulty compressor check valve. If superheat control is found to not function properly during compressor operation, the control module 34 assumes that pressure equalization is caused by either one of faults (1) and (2), i.e. the expansion valve 32 turning in the wrong direction or not moving at all. With a low probability, the pressure equalization could also be caused by a faulty compressor check valve (fault (4b)). The control module 34 then moves on to step E.

In step E, the control module 34 looks at the degree of valve opening during the compressor on periods. In the case of the expansion valve 32 turning in the wrong direction, the expansion valve 32 will be 100% open at the start of operation of the compressor 28, and the control module 34 therefore tries to close the expansion valve 32 to increase the superheat during compressor operation. If the control module 34 determines a median degree of opening of the expansion valve 32 during a compressor on period below a certain threshold, for example, below 10%, it will assume with high probability that pressure equalization is caused by fault (1) and with rather low probability that pressure equalization is caused by fault (2) or (4b). Otherwise, the control module 34 assumes with high probability that pressure equalization is caused by fault (2) and with low probability that pressure equalization is caused by fault (1) or (4b).

Depending on the outcome of the decision tree, the control module 34 may issue a corresponding warning so that an identified fault can be remedied.

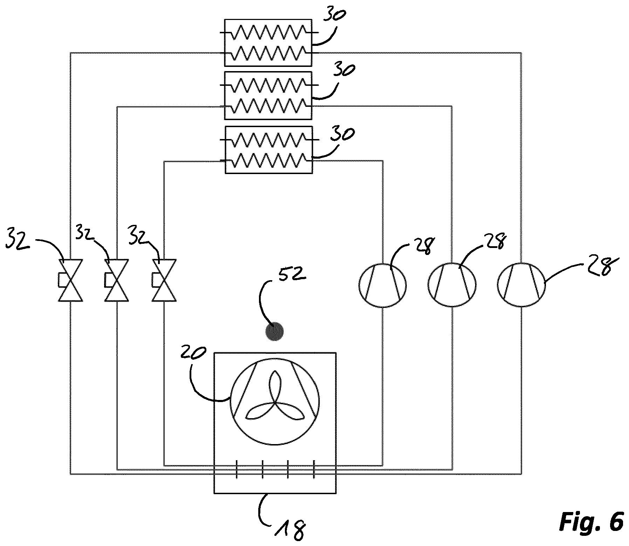

An alternative embodiment of a refrigeration apparatus 26 installed in the display cabinet 14 is shown in Fig. 6. This refrigeration apparatus 26 comprises a plurality of refrigeration circuits, in the present case three refrigeration circuits. The concept of multiple refrigeration circuits serves to reduce the amount of refrigerant per circuit.

Each refrigeration circuit includes a respective compressor 28, a respective condenser 30 and a respective expansion valve 32. All of the refrigeration circuits share a common evaporator 18.

The cooling capacity of the evaporator 28 can be controlled by operating one or more of the plurality of compressors 28, respectively, by shutting one or more of the plurality of compressors 28 down. The control module 34 (not shown in Fig. 6) starts or stops the compressors 28 in order to control the temperature in the interior space 16 of the display cabinet 14.

By starting a compressor 28, the cooling capacity of the evaporator 18 will increase. With a certain delay, depending on the system inertia, the air outlet temperature measured by the air outlet temperature sensor 52 (Fig. 1) will decrease and after an additional timespan will be generally constant. A change of the derivative or slope over time of the air outlet temperature measured prior to a compressor start up and after a compressor start up therefore indicates successful starting of a compressor 28. If a second compressor 28 is started shortly after a first compressor 28 has been started, both have an effect on the air outlet temperature. If the time between both compressor start-ups is long enough, both compressor start-ups can be detected individually by comparing the derivative of the temperature before and after each compressor start up.

Since noise or short-term disturbances of the signal output from the air outlet temperature sensor 52 may occur, the temperature derivatives are preferably determined from a filtered sensor signal. Time constants of outer disturbances in the display cabinet 14, such as for example changing ambient conditions, may be longer than the time constants relevant in connection with a compressor start-up and therefore may not impair compressor start-up detection based on a comparison of the derivative of the air outlet temperature measured before and after compressor start-up.

However, there may be other disturbances affecting the air outlet temperature that have time constants similar to that of a compressor start-up and therefore might, by chance, interfere with the compressor start-up detection. Exclusively observing the derivative of the air outlet temperature before and after a compressor start-up may therefore not be in enough to correctly detect a successful compressor start-up. A more reliable compressor start-up detection can be received if the derivative of an additional refrigeration parameter is monitored, such as at least one of a temperature in the interior space 16 of the display cabinet 14, an evaporator fin temperature, an outlet temperature of water cooling the evaporator 18, and an outlet temperature of hydraulic fluid exchanging heat with the condenser 30.

An additional measure that can be applied to make unsuccessful compressor start-up detection more robust against a false detection of an unsuccessful compressor start-up, is to count the number of compressor start-ups detected as successful and unsuccessful over a longer period of time, for example over the course of a day, and to identify a compressor 28 as faulty only if the ratio of the number of start-ups detected as unsuccessful versus the number of start-ups detected as successful of this compressor 28 exceeds a predetermined threshold.

The above described fault detection concepts rely on the assumption that the various sensors used therein work properly. However, the following sensor failures may occur: a sensor and may not be connected or at least not correctly connected; a sensor may be connected to the wrong port, for example two sensors may be switched; a sensor may be broken and may show a totally wrong value, i.e. a value which is not in the expected range, a slightly wrong value, i.e. a value which is in the expected range but still wrong, or a wrong dynamic behaviour.

In order to detect sensor failures of the above kind, the control module 34 may be configured to perform at least one of an electrical connection check, i.e. a check if a signal is received from a sensor at all; a sensor value range check, i.e. a check if the value output from a sensor lies within an expected range; a direct sensor value comparison, i.e. a comparison of the values output from two sensors, for example a comparison of the air outlet temperature and the evaporator fin temperature; a comparison of a measured sensor value with a calculated or modelled value, for example, a comparison of a measured discharge temperature with a calculated discharge temperature.

In addition, the control module 34 may be configured to carry out sensor value slope checks based on the knowledge that a sensor value behaves in a certain way upon a certain operation event. For example, refrigerant suction pressure decreases after a start-up of a compressor 28; refrigerant suction pressure increases after a shutdown of a compressor 28; refrigerant discharge pressure increases after a start-up of a compressor 28; refrigerant discharge pressure decreases after a shutdown of a compressor 28. Should the sensor values output from the suction line pressure sensor 42 and the discharge line pressure sensor 48 therefore not show the expected behavior upon the start-up or shutdown of a compressor 28, the control module 34 may issue a corresponding warning, e.g. indicating that the suction line pressure sensor 42 and the discharge line pressure sensor 48 have been interchanged.

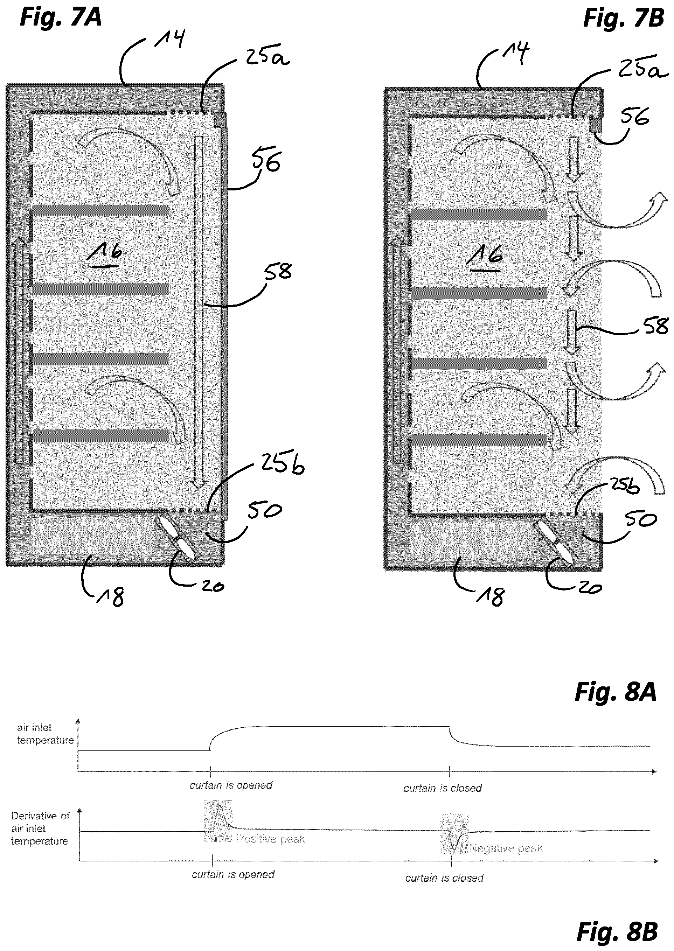

The display cabinet 14 may comprise a night blind or night curtain 56 which can be closed, for example for energy and cost saving reasons, when no access to the interior space 16 of the display cabinet 14 needs to be provided. In an open state of the night curtain 56, as shown in Fig. 7B, the interior space 16 of the display cabinet 14 is open to the environment and the airflow 58 from top to bottom can interact with the ambient air, i.e. cool air may leave the interior space 16 and warmer ambient air may enter the interior space 16 and mix with the cooler air inside the display cabinet 14. In a closed state of the night curtain 56, as shown in Fig. 7A, the airflow 58 from top to bottom flows along an inner surface of the closed night curtain 56 such that interaction between the cool air inside the display cabinet 14 and the warmer ambient air is minimized.

As long as the night curtain 56 is closed, the airflow 58 inside the display cabinet 14 is at least not substantially influenced by the warmer ambient air. However, as soon as the night curtain 56 is opened, the airflow 58 is mixed with warmer ambient air. Consequently, the air inlet temperature sensor 50 measurers an increased air inlet temperature when the night curtain 56 is open as compared to when the night curtain 56 is closed, as shown in Fig. 8A.

A night curtain 56 opening event can therefore be attributed to a positive peak in the air inlet temperature measured by the air inlet temperature sensor 50, while a night curtain 56 closing event can be attributed to a negative peak in the measured air inlet temperature, as shown in Fig. 8B.

It is to be understood that a night curtain 56 opening event may be detected only if the derivative of the measured air inlet temperature exceeds a predetermined threshold. Likewise, a night curtain 56 closing event may be detected only if the derivative of the measured air inlet temperature falls below a predetermined threshold.

Alternatively or additionally, a night curtain 56 opening event may be detected only if the derivative of the measured air inlet temperature increases by a certain amount within a predetermined time span. Likewise, a night curtain 56 closing event may be detected only if the derivative of the measured air inlet temperature decreases by a certain amount within a predetermined time span.

In any case, the detection of night curtain 56 opening and closing events may only be carried out or may only be valid during operation of the at least one fan 20, preferably after the at least one fan 20 has been working for a certain period of time.

Furthermore, the detection of night curtain 56 opening and closing events may only be carried out at times when it is known that the night curtain 56 should be closed. Thereby, night curtain 56 opening and closing detection may be avoided during operation states of the display cabinet 14 during which night curtain 56 opening and closing detection may be less reliable, for example during a defrosting of the evaporator 18.

Since the opening and closing of the night curtain 56 are events which have a relatively strong impact on the air inlet temperature measured by the air inlet temperature sensor 50, the resulting peaks in the derivative of the air inlet temperature can generally be distinguished from peaks resulting from other events, such as compressor start-ups. Nonetheless, in order to achieve a more reliable detection of night curtain 56 opening and closing events, additional detection concepts, such as the compressor start-up detection as described above in connection with Fig. 6, may be used to verify that a measured increase in air inlet temperature is indeed caused by an opening of the night curtain 56 and not by a compressor start-up.

The control module 34 may be configured to issue a warning if a closing of the night curtain 56 is not detected at an expected time, for example at the end of business of a grocery store or a supermarket, and/or if an opening of the night curtain 56 is detected at an unexpected time, for example during night hours, holidays or other times when the grocery store or supermarket is regularly closed.

Additionally or alternatively, the control module 34 may be configured to adapt the general control of the display cabinet 14 to the detected closed or open state of the night curtain 56, for example, by adjusting at least one of a setpoint of the cabinet air temperature, turning lights on or off, adjusting the speed of the at least one fan 20 and adjusting the speed of the compressor 28.

Instead of a night curtain 56, the display cabinet 14 may be provided with at least one door and the control module 34 may be configured to detect a door opening based on a monitoring of the air inlet temperature as described above. In particular, the control module 34 may be configured to distinguish between a short door opening which may occur during normal use of the display cabinet 14, for example when a user opens the door to retrieve food from the display cabinet 14, and an abnormally long door opening, for example caused by a user not properly closing the door after use.

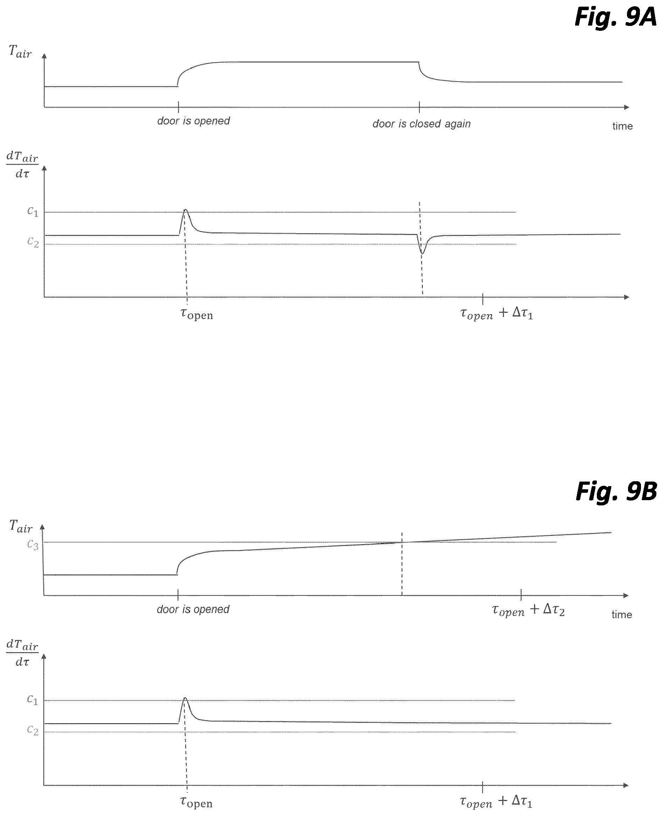

To this end, the event of a door opening may be detected at a time Tₒₚₑₙ when the derivative dTₐᵢᵣ/d_{T} of the measured air inlet temperature exceeds a first threshold c₁. If during a following predetermined time span τₒₚₑₙ + Δτ₁ a temperature derivative dTₐᵢᵣ/dτ below a second threshold c₂ is detected, the door is considered to have been closed in an appropriate time and the detected door opening is defined a short door opening (Fig. 9A).

However, if during the following predetermined time span τₒₚₑₙ + Δτ₁ the temperature derivative dTₐᵢᵣ/dτ does not fall below the second threshold C₂, the door opening is defined and abnormally long door opening and a warning is issued (Fig. 9B).

In order to further increase the certainty of detection of an abnormally long door opening, other measured temperature values may additionally be considered. For example, if the cabinet air temperature rises above a third threshold during a second predetermined time span, this may be a further indicator of an abnormally long door opening.

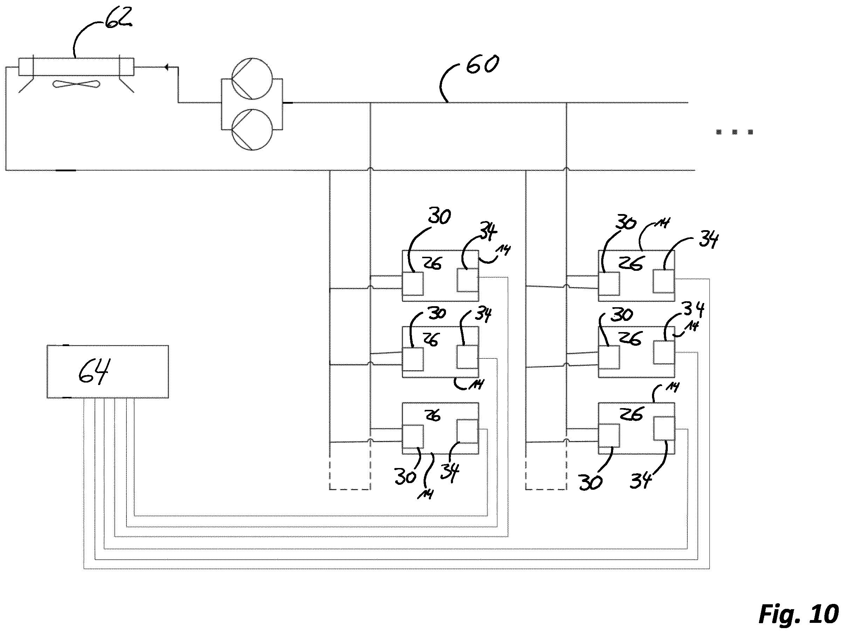

The display cabinet 14 may be part of a refrigeration system comprising a plurality of display cabinets 14 of the kind described above, as shown in Fig. 10. The condensers 30 of the display cabinets 14 are connected in parallel to a common heat sink, in the present case to a common hydraulic loop 60 in which a hydraulic fluid circulates and exchanges heat with a dry cooler 62. The hydraulic fluid may, for example, be water or water based brine, in which case the hydraulic loop 60 may also be referred to as a water loop system. The refrigeration system comprises a central monitor 64 which communicates with the individual control modules 34 of the display cabinets 14.

In each display cabinet 14, the refrigerant passing through the condenser 30 exchanges heat with the hydraulic fluid, whereby the hydraulic fluid passing through the condenser 30 is heated. The hydraulic loop 60 may be balanced, i.e. the mass flow of hydraulic fluid through the condensers 30 is adjusted such that the hydraulic fluid outlet temperatures at the outlets of the condensers 30 are generally equal for all of the condensers 30 during normal operation of the refrigeration system.

By providing extra hydraulic fluid temperature sensors at the inlets and outlets of the condensers 30 and directly measuring the respective hydraulic fluid inlet and outlet temperatures, it would be possible to directly detect faults both in the hydraulic system and in the respective refrigerant circuits, which could lead to system malfunction and/or inefficient operation of the refrigeration system. These faults may include: blockage of the hydraulic fluid flow through a condenser 30; faulty balancing of the hydraulic loop 60, i.e. unsuitable mass flow of hydraulic fluid through a condenser 30; an overcharging of the respective refrigerant circuit, i.e. too much refrigerant circulating in the refrigerant circuit; and low efficiency of a condenser 30, possibly due to a wrong dimension of the condenser 30. Of course, the hydraulic fluid temperature sensors needed for the detection of these faults make the refrigeration system more complicated and, thus, more expensive.

The refrigeration system disclosed herein makes it possible to detect the above faults in the hydraulic loop 60 and in the refrigerant circuits of the individual display cabinets 14 without any additional hydraulic fluid temperature sensors provided at the inlets and outlets of the condensers 30. Instead, the refrigeration system disclosed herein builds on the assumption that the hydraulic loop 60 is hydraulically balanced and the central monitor 64 monitors the condensing temperatures in the refrigeration apparatuses of the display cabinets 14, which are calculated from the output of the discharge line pressure sensors 48 that are provided in the refrigeration apparatuses anyway.

The deviation of a calculated condensing temperature in a potentially faulty refrigeration apparatus from the average of the condensing temperatures in other refrigeration apparatuses of the same or similar kind in the refrigeration system can then indicate one of the above faults in either the hydraulic loop 60 or in the respective refrigerant circuit. In addition, the opening of the expansion valve 32 of the potentially faulty refrigeration apparatus can be used to discriminate the fault of overcharging of the refrigeration circuit, i.e. too much refrigerant circulating in the refrigeration circuit, against other possible faults, as will be described in more detail below.

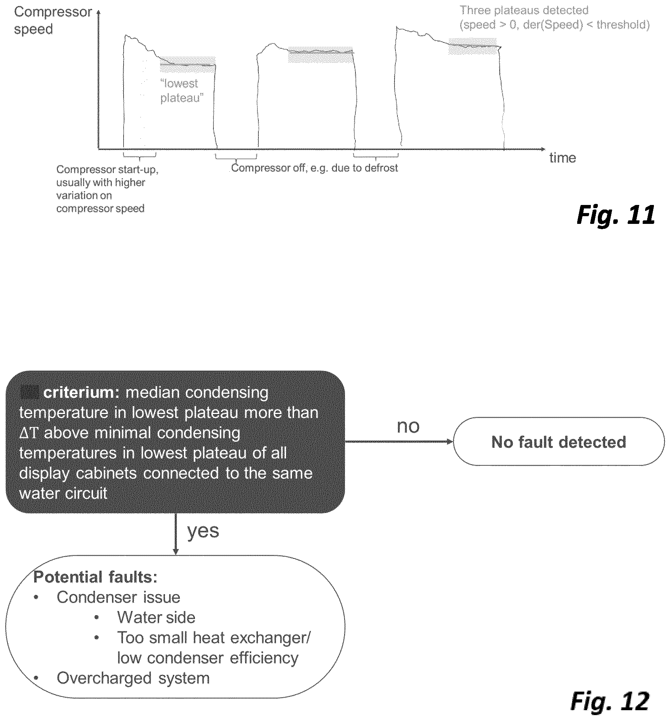

In order to provide a more reliable fault detection, the output from the discharge line pressure sensors 48 in the refrigeration apparatuses is filtered prior to calculation of the associated condensing temperatures. Fig. 11 shows the development of compressor speed during three compressor on periods which are separated by compressor off periods, for example, due to a defrosting of an evaporator 18. As can be seen from Fig. 11, the variation in compressor speed is usually higher during the start-up phase of a compressor 28, whereas the compressor speed evens out into a plateau towards the end of the compressor on period. While the output of a discharge line pressure sensor 48 is collected throughout a predetermined period of time, for example throughout a day, only the discharge line pressure measured during the lowest plateau of compressor speeds is used for the calculation of a median condensing temperature of the respective refrigeration apparatus.

As shown in Fig. 12, the calculated median condensing temperature in a potentially faulty refrigeration apparatus is then compared to the condensing temperatures of the other refrigeration apparatuses of the same or similar kind connected to the same hydraulic loop 60. If the calculated median condensing temperature does not exceed a minimum lowest plateau condensing temperature of all the same or similar display cabinets 14 connected to the same hydraulic loop 60 by more than a predetermined temperature difference ΔT, no fault is detected. However, if the calculated median condensing temperature of the potentially faulty refrigeration apparatus does exceed a minimum lowest plateau condensing temperature of the other display cabinets 14 connected to the hydraulic loop 60 by more than the predetermined temperature difference ΔT, then one of the following potential faults may have occurred: the hydraulic fluid flow through the condenser 30 of the potentially faulty refrigeration apparatus may be blocked or not correctly balanced; the condenser 30 may be too small or the efficiency of the condenser 30 may be too low; the refrigerant circuit may be overcharged, i.e. there may be too much refrigerant flowing through the refrigerant circuits.

### Reference numerals

- 14: display cabinet
- 16: interior space
- 18: evaporator
- 20: fan
- 21: back channel
- 22: hole
- 23: shelf
- 24: back wall
- 25a: top grid
- 25b: bottom grid
- 26: refrigeration apparatus
- 28: compressor
- 30: condenser
- 32: expansion valve
- 34: control module
- 36: variable speed inverter drive
- 38: suction line temperature sensor
- 40: suction line
- 42: suction line pressure sensor
- 44: discharge line temperature sensor
- 46: discharge line
- 48: discharge line pressure sensor
- 50: air inlet temperature sensor
- 52: air outlet temperature sensor
- 54: cabinet air temperature sensor
- 56: night curtain
- 58: air flow
- 60: hydraulic loop
- 62: dry cooler
- 64: central monitor

## Claims

1. A refrigeration system comprising at least one display cabinet (14) equipped with a refrigeration apparatus (26) defining at least one refrigeration circuit and comprising: at least one compressor (28), a condenser (30), an expansion valve (32), an evaporator (18), a refrigerant circulating therethrough, a plurality of sensors (38, 42, 44, 48) measuring pressure and temperature of the refrigerant at various positions in the refrigeration circuit, and a control module (34) configured to control operation at least of the compressor (28) based on output from at least one of the sensors (38, 42, 44, 48);
**characterized in that**
the control module (34) is further configured to detect any faulty or non-optimal functioning of at least one of the compressor (28), the expansion valve (32) and a sensor based on output from at least one of the sensors (38, 42, 44, 48).

2. The refrigeration system of claim 1, wherein the control module (34) determines a faulty or non-optimal functioning of a sensor if the sensor output does not show an expected behavior in a predetermined operation event.

3. The refrigeration system of claim 1 or 2,
wherein a check valve is arranged in the compressor (28) or downstream of the compressor (28) and controlled to close a discharge line (46) downstream of the compressor (28) when the compressor (28) is temporarily shut-off;
wherein the expansion valve (32) is controlled to close when the compressor (28) is temporarily shut-off;
wherein the refrigeration apparatus (26) comprises a suction line pressure sensor (42) monitoring refrigerant suction pressure in a suction line (40) upstream of the compressor (28) and a discharge line pressure sensor (48) monitoring refrigerant discharge pressure in the discharge line (46) downstream of the compressor (28);
wherein the control module (34) is configured to detect a faulty or non-optimal functioning of the expansion valve (32) based on an equalization of the suction pressure and discharge pressure during a temporary compressor (28) shut-off.

4. The refrigeration system of claim 3, wherein the control module (34) is configured to detect a faulty or non-optimal functioning of the expansion valve (32) based on the frequency of pressure equalization over a plurality of temporary compressor (28) shut-offs.

5. The refrigeration system of any one of the preceding claims, wherein at least one of the display cabinets (14) further comprises: a curtain or door (56) configured to close off an interior space (16) of the display cabinet (14); at least one fan (20) configured to push air through or over the evaporator (18); and an air inlet temperature sensor (50) arranged to measure the air inlet temperature of the air pushed through or over the evaporator (18), wherein the control module (34) is configured to detect an opening and a closing of the curtain or door (56) based on the measured air inlet temperature.

6. The refrigeration system of claim 5, wherein the control module (34) is configured to detect an opening and a closing of the curtain or door (56) based on the measured air inlet temperature only during operation of the fan (20) and, in particular, if the fan (20) has been operating for a predetermined amount of time.

7. The refrigeration system of claim 5 or 6, wherein the control module (34) is configured to detect an opening of the curtain or door (56) based on a positive peak in the derivative of the measured air inlet temperature and a closing of the curtain or door (56) based on a negative peak in the derivative of the measured air inlet temperature.

8. The refrigeration system of any one of claims 5 to 7, wherein an opening of the curtain or door (56) is detected if a positive peak in the derivative of the measured air inlet temperature exceeds a first threshold; and/or wherein a closing of the curtain or door (56) is detected if a negative peak in the derivative of the measured air inlet temperature exceeds a second threshold.

9. The refrigeration system of any one of claims 5 to 8, wherein the air inlet temperature sensor (50) is arranged at a location where an air flow inside the interior space (16) of the display cabinet (14) is directly influenced by ambient air upon an opening of the curtain or door (56).

10. The refrigeration system of any one of claims 5 to 9, wherein the control module (34) is configured to control operation of the display cabinet (14) and, in particular, to control operation of at least one of the compressor (28), the expansion valve (32), the fan (20) and lights of the display cabinet (14), based on a detected opening or closing of the curtain or door (56), and/or
wherein the control module (34) is configured to issue a warning if an opening of the curtain or door (56) is detected or if a closing of the curtain or door (56) is not detected within a predetermined amount of time after an opening of the curtain or door (56) has been detected.

11. The refrigeration system of any one of the preceding claims, wherein the control module (34) is configured to detect an unsuccessful start of the compressor (28) based on a comparison of the derivative of a refrigeration parameter prior to the output of a start command to the compressor (28) with the derivative of the refrigeration parameter after the output of a start command to the compressor (28),
in particular wherein the refrigeration parameter is one of an air temperature inside an interior space (16) of the display cabinet (14), an evaporator fin temperature, an outlet temperature of water cooling the evaporator (18), an outlet temperature of hydraulic fluid exchanging heat with the condenser (30).

12. The refrigeration system of any one of the preceding claims, wherein the display cabinet (14) is equipped with a refrigeration apparatus (26) comprising an evaporator (18) which is associated with a plurality of refrigeration circuits each comprising their own compressor (28), condenser (30) and expansion valve (32), the refrigeration apparatus (26) further comprising an air outlet temperature sensor (52) measuring the air outlet temperature of air passing through or over the evaporator (18) and a control module (34) configured to detect an unsuccessful start of a compressor (28) based on the measured air outlet temperature and, in particular, based on a comparison of the derivative of the air outlet temperature measured prior to the output of a start command to the compressor (28) with the derivative of the air outlet temperature measured after to the output of a start command to the compressor (28).

13. The refrigeration system of any one of the preceding claims, comprising a plurality of refrigerated display cabinets (14) and further comprising a common heat sink, such as a hydraulic loop (60), wherein the condenser (30) of each display cabinet (14) is configured to exchange heat with the common heat sink and wherein the condensers (30) of the plurality of refrigerated display cabinets (14) are connected in parallel to the common heat sink.

14. The refrigeration system of claim 13, further comprising a central monitor (64) configured to detect an overcharged refrigeration circuit in one of the plurality of display cabinets (14) based on the condensing temperatures in the plurality of display cabinets (14), in particular based on a significant deviation of the condensing temperature in the one display cabinet (14) from an average condensing temperature in the plurality of display cabinets (14).

15. The refrigeration system of claim 14, wherein the central monitor (64) is configured to calculate the condensing temperature in a display cabinet (14) from the output of a discharge line pressure sensor (48) monitoring refrigerant discharge pressure in the discharge line (46) downstream of the compressor (28) of the display cabinet (14).
